# EUROPEAN PATENT APPLICATION

(11) **EP 0 681 942 A1**
(43) Date of publication of application: **15.11.1995**
(21) Application number: 94107356.1
(22) Date of filing: 11.05.1994
(51) Int. Cl.: B60P 7/08

(54) **Holder device for a vehicle loading floor**

(71) Applicant: FRAMTID KREDIT UND FINANZ ANSTALT, FL-9490 Vaduz (LI)
(72) Inventor: Bonelli, Piero, FL-9490 Vaduz (LI)
(74) Representative: Buzzi, Franco

(57) **Abstract**

Holder device for a loading floor (P) of a transportation vehicle, comprising at least two rods (1, 2) intended to be arranged in a crossed configuration substantially parallelly to the loading floor (P) at a predetermined distance therefrom, and releasable locking means (4a, 5a) for rigidly securing the rods (1, 2), at the respective ends thereof (1a, 1b; 2a, 2b), to the loading platform (P). The rods (1, 2) define receptacles (R) for containing objects carried on the loading floor (P), so as to prevent accidental displacement thereof when the vehicle is travelling.

## Description

The present invention is related to a device intended to be applied to a loading floor or platform of a vehicle for holding articles resting on such a loading floor.

The device according to the invention is essentially characterized in that it comprises at least two rods intended to be positioned in a crossed configuration substantially parallelly to the loading floor at a predetermined distance therefrom, and disengageable locking means for rigidly securing said rods, at the respective ends thereof, to the loading floor.

The holder device according to the invention allows, in an extremely simple, convenient and cheap way, to subdivide the area of the loading floor into receptacles containing the objects carried thereon, so as to prevent accidental and undesired displacements thereof during transportation. The dimensions, configuration and disposition of the receptacles thus defined may be readily adjusted by simply changing the relative positioning between the two rods, so as to match with those of the transported loads.

The device thus performs an effective safety task and can easily suit loading floors or platforms of different sizes by employing rods of different length, or even of adjustable length, for instance by means of a telescopic structure thereof.

When the holder device need not to be used, the two rods may be readily released and stored anywhere, even on board the vehicle, with a negligible encumbrance.

The holder device of the invention may be applied as an "after market" fitting to already existing vehicles, or may be directly provided by the vehicle manufacturer as an original equipment. The device can be conveniently employed with any transportation land vehicles (cars, trucks, railway vehicles), as well as with waterborne vessels and aircrafts.

The disengageable locking means for fixing the rod ends to the loading floor of the vehicle may be conveniently designed so as to enable positioning of these rods according to different configurations of mutual crossing. These locking means may include for each rod, according to a preferred embodiment of the invention, a pair of support members adapted to be applied onto the loading floor of the vehicle generally perpendicularly to the rod and provided with respective quick anchoring elements for the ends thereof.

These quick anchoring elements may be conveniently constituted by a plurality of side-by-side snap-in seats.

The support members may for instance be comprised of modular bars, secured onto the vehicle loading floor either detachably or permanently.

The support bars may be further separated from one another, and produced by cutting a set length of a continuous piece long enough to cover the maximum size contemplated for the loading floors of a set type of vehicles, or they may be interconnected at the respective adjacent ends thereof so as to define a monolithic frame substantially shaped like the perimeter of the loading floor of a specific vehicle.

Further features and advantages of the invention will become apparent from the following detailed description, with reference to the accompanying drawings purely provided by way of non-limiting example, in which:
- figure 1 is a diagrammatic perspective view of a preferred embodiment of the holder device according to the invention,
- figure 2 shows the application of the holder device to the rear luggage compartment of a sedan car,
- figures 3 through 6 are diagrammatic top plan views showing four different embodiments of the holder device, and
- figures 7 and 8 are perspective views showing the application of the holder device to the loading floor of a station wagon car in two different configurations thereof.

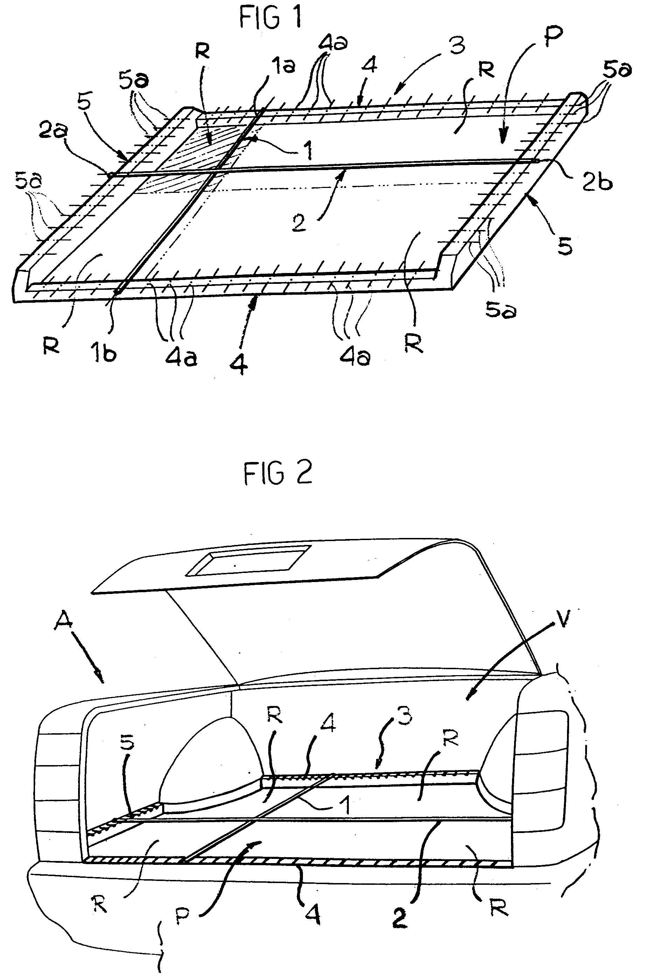

In the embodiment shown in figure 1, the holder device according to the invention essentially comprises two rods 1, 2 arranged in a mutually perpendicular crossed configuration and in a superimposed condition onto a support frame 3, intended to be placed on the loading floor or platform P of a transportation vehicle, for instance of a car.

The support frame 3 has a generally quadrangular shape and is constituted by a pair of bar elements 4 oriented parallelly to the rod 2 and supporting the ends 1a, 1b of the rod 1, and by a pair of bar elements 5 oriented parallelly to the rod 1 and supporting the ends 2a, 2b of the rod 2.

In the example of figure 1, the support bars 5 have a slightly greater height than the support bars 4, which allows the two rods 1, 2 to cross each other at two different levels. These levels shall be situated at a distance from the loading floor P of about a few centimeters.

For retaining the ends 1a, 1b and 2a, 2b of the rods 1, 2, the respective support bars 4, 5 are provided with respective releasable locking means. These locking means, which for the sake of simplicity of illustration are not shown in detail since generally within the knowledge of the man skilled in the art, may for instance be constituted by simple elastically yieldable seats formed on top of the bars 4, 5 and adapted to receive, by means of a quick snap fit, the corresponding ends of the rods 1, 2. As an alternative, the releasable locking means may be constituted by simple holes adapted to be engaged by spring pins carried by the ends of the rods 1, 2, or by bayonet coupling members, or still by any equivalent system. In any case, to the aim of allowing positioning of the rods 1, 2 according to selectively different configurations of mutual crossing, each bar 4, 5 is formed with a plurality of respective locking means arranged side by side along a row, such as diagrammatically shown by dotted lines 4a, 5a.

The spaces delimited between the rods 1, 2 and the support bars 4, 5 define, with the loading floor P, receptacles R for containing and holding objects carried on the floor P. The size of the receptacles R can be readily adjusted simply varying the mutual positioning between the rods 1, 2 as a function of the conformation and disposition of the transported articles.

It is evident that using only two rods 1, 2, four receptacles R are generated: the number thereof may however be increased, whenever necessary, employing three or more additional identical rods.

As previously explained, in the case of the example shown in figure 1 the two pairs of support bars 4, 5 are rigid with one another at the respective ends thereof, so as to define the frame 3 in one piece, which can be prefabricated according to the shape or, to better say, to the outer perimeter of the loading floor P for which the holder device is intended to be used.

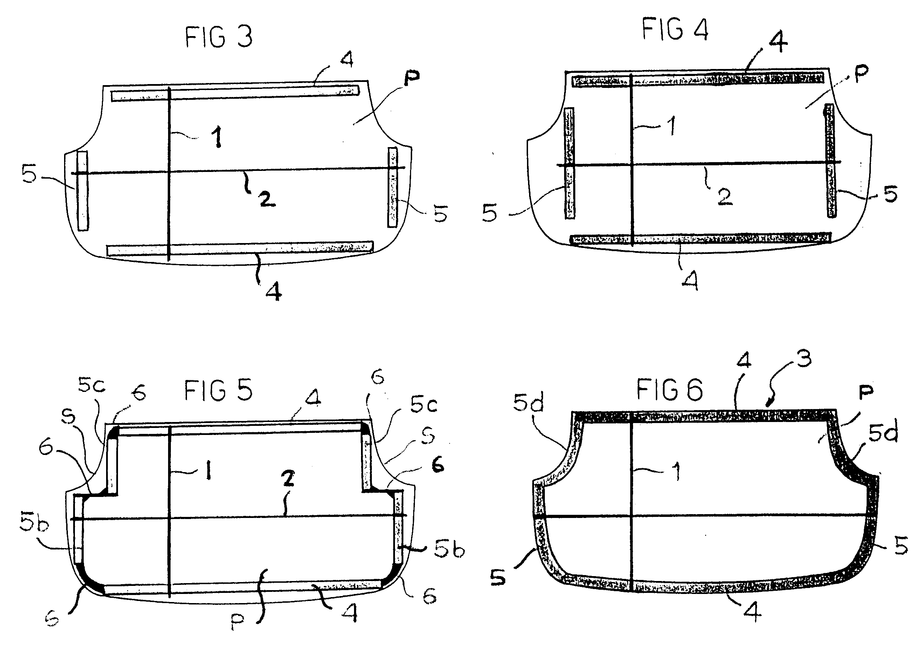

In alternative, the two pairs of support bars 4, 5 may be separated from one another, as in the case of the embodiments shown in figures 3 and 4, and in such a case they can be formed by cutting selected lengths from a continuous indefinite element, or anyhow from an element long enough to cover the desired application. This arrangement is to be considered as the preferred one in case the holder device according to the invention is intended to be employed as an "after market" fitting and, therefore, is to be directly installed by the user. In this case the application of the support bars 4, 5 can contemplate permanently anchoring thereof to the loading floor P, by means of screws, gluing or any other equivalent system, or detachably securing thereof by means of hook-and-loop systems or similar releasable retaining means.

According to another embodiment, the support bars 4, 5 can simply rest upon the loading floor P, and retaining thereof in the desired position can be simply performed by the two rods 1, 2 following engagement of the ends thereof into the locking means of the bars themselves.

Figure 5 shows an embodiment according to which the support bars of the holder device are designed so as to copy as precisely as possible the perimeter of a loading floor P having curved areas S (for instance corresponding to the wheelhouses of a car), anyhow employing straight profiles for the support rods. In this case the two bars 5 have a broken-line configuration, defined for each one by two portions 5b, 5c connected to each other and to the corresponding ends of the support bars 4 by means of respective joining members 6.

The example of figure 6 shows an application for the same loading floor P of figure 5, according to which the two pairs of support bars 4, 5 are formed in one piece so as to define the monolithic frame 3: in this case the two support bars 5 are formed with respective curved portions 5d shaped as the curved areas S of the loading floor P.

Figure 2 shows the application of the holder device according to figure 6 onto the floor P of the rear luggage compartment V of a sedan car A: in this case the frame 3 is directly integrated with the compartment V, during manufacturing of the car. As it can be seen, the rods 1, 2 fitted onto the frame 3 are oriented one parallelly to and the other transversely to the longitudinal axis of the car V.

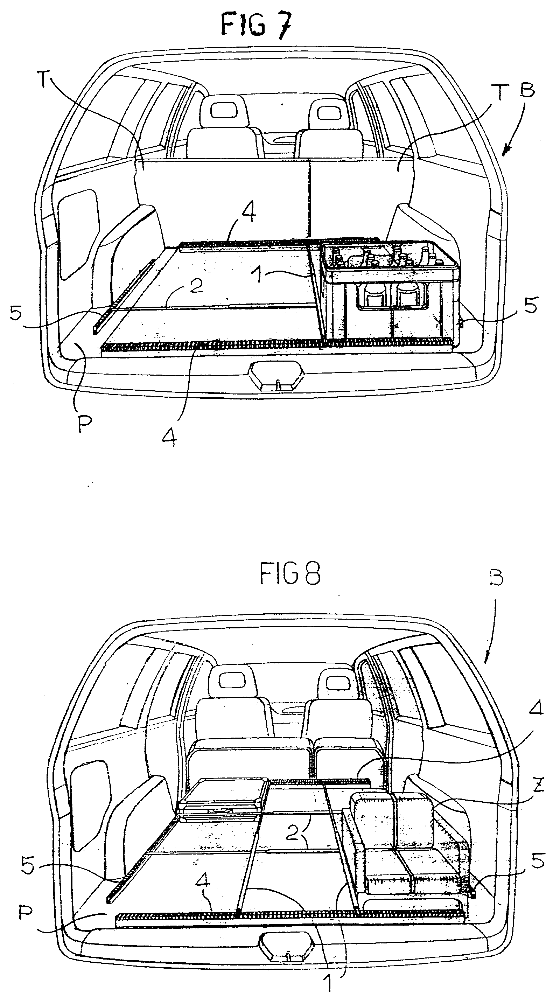

Figures 7 and 8 show the application of the holder device according to the embodiment of figure 4, to the loading floor P of a station wagon or utility car B, having rear seats provided with foldable backrests T. In this case rods 1, 2 of adjustable length are employed, having for instance a telescopic structure, so as to allow the holder device according to the invention to be used either in the raised condition of the rear backrests T (figure 7), or the lowered condition thereof (figure 8). To shift from the first to the second configuration of use it is sufficient, after lowering the rear backrests T, to locate the front support bar 4 more forwardly, to use bars 5 of a greater length (or to add extension members thereto), and to increase correspondingly the length of the rods 1 and 2.

In the case of figure 8 the use of two pairs of rods 1 is also depicted, which enable providing a plurality or receptacles R for holding different objects, among which for instance a supplementary seat Z.

As pointed out in the above, the holder device according to the invention can be to advantage employed in order to improve transportation convenience and safety of objects resting on a loading floor or platform not only of cars, but also for vessels, aircrafts, railway vehicles and the like.

Naturally the details of construction and the embodiments may be widely varied with respect to what has been disclosed and illustrated, without thereby departing from the scope of the present invention, such as defined in the appended claims.

## Claims

1. Holder device for a vehicle loading floor (P), characterized in that it comprises at least two rods (1, 2) intended to be positioned in a crossed configuration substantially parallelly to the loading floor (P) at a predetermined distance therefrom, and disengageable locking means (4a, 5a) for rigidly securing said rods (1, 2), at the respective ends thereof (1a, 1b; 2a, 2b), to the loading floor (P).

2. Holder device according to claim 1, characterized in that the locking means (4a, 5a) are adapted to allow positioning of said rods (1, 2) according to different configurations of mutual crossing.

3. Holder device according to claim 1 or claim 2, characterized in that the locking means include, for each rod (1, 2), a pair of support members (4, 5) adapted to be applied onto the loading floor (P) generally perpendicularly to the rod (1, 2) and provided with respective quick anchoring elements (4a, 5a) for the ends (1a, 1b; 2a, 2b) thereof.

4. Holder device according to claim 3, characterized in that said quick anchoring elements are constituted by a plurality of side-by-side snap in seats (4a, 5a).

5. Holder device according to claim 4, characterized in that the anchoring elements (4a) of a pair of said support members (4) are adapted to be positioned at a distance from the loading floor (P) different from that of the anchoring elements (5a) of the other pair of said support members (5).

6. Holder device according to any of claims 3 through 5, characterized in that the support members are constituted by modular bars (4, 5).

7. Holder device according to claim 6, characterized in that the support bars (4, 5) are adapted to be detachably secured onto the loading floor (P).

8. Holder device according to claim 6, characterized in that the support bars (4, 5) are adapted to be permanently secured onto the loading floor (P).

9. Holder device according to claim 6, characterized in that the support bars (4, 5) are separated from one another.

10. Holder device according to claim 6, characterized in that the support bars (4, 5) are interconnected at the respective adjacent ends thereof so as to define a monolithic frame (3) substantially shaped like the perimeter of the loading floor (P).

11. Holder device according to claim 10, characterized in that said frame (3) is integrated with the loading floor (P) of the vehicle.

12. Holder device according to any of the preceding claims, characterized in that the rods (1, 2) are adjustable in length.

13. A transportation vehicle having a loading floor (P) provided with a holder device (1,2,4,5) according to any of the preceding claims.
